# EUROPEAN PATENT APPLICATION

(11) **EP 4 819 243 A1**
(43) Date of publication of application: **07.10.2026**
(21) Application number: 24895881.1
(22) Date of filing: 06.09.2024
(51) Int. Cl.: H01M 4/58, H01M 4/62, H01M 10/054, C01B 25/45

(54) **POSITIVE ELECTRODE ACTIVE MATERIAL AND PREPARATION METHOD THEREFOR, SODIUM ION BATTERY, AND ELECTRIC DEVICE**

(30) Priority: 30.11.2023 CN 202311636031
(71) Applicant: BYD Company Limited, Shenzhen, Guangdong 518118 (CN)
(72) Inventor: ZHANG, Yadong, Shenzhen, Guangdong 518118 (CN); JIN, Lina, Shenzhen, Guangdong 518118 (CN); LI, Xiangyu, Shenzhen, Guangdong 518118 (CN); YIN, Xiaoqiang, Shenzhen, Guangdong 518118 (CN)
(74) Representative: Taor, Simon Edward William
(86) International application number: PCT/CN2024/117579
(87) International publication number: WO 2025/112782

(57) **Abstract**

A positive electrode active material and a preparation method therefor, a sodium ion battery, and an electrical device. The positive electrode active material has compositions as shown in the following general formula: NaₓM_{y}Eₙ(P_{1-w}A_{w}O₄)_{z}(P₂₋ᵤAᵤO₇), where A is selected from one or more of S, Si, B, As, or Al; M is selected from one or more of Fe, Ti, V, Cr, Mn, Co, Ni, Cu, or Zn; E is selected from one or more of Zr, Tc, Ru, Rh, Ir, Nb, La, or Ce; x satisfies a condition: 2≤x≤4, and 1≤y+n≤3, wherein y and n are both not 0; z satisfies a condition: 0≤z≤2, and w satisfies a condition: 0<w≤0.35; and u satisfies a condition: 0≤u≤0.2.

## Description

### PRIORITY INFORMATION AND CROSS REFERENCE

This application claims priority to Chinese Patent Application No. 202311636031.1, filed with the China National Intellectual Property Administration on November 30, 2023 and entitled "POSITIVE ELECTRODE ACTIVE MATERIAL AND PREPARATION METHOD THEREFOR, SODIUM ION BATTERY, AND ELECTRICAL DEVICE", the entire content of which is incorporated herein by reference.

### TECHNICAL FIELD

The present disclosure relates to the field of positive electrode active materials for sodium ion batteries, and specifically, to a positive electrode active material and a preparation method therefor, a sodium ion battery, and an electrical device.

### BACKGROUND

Sodium ion batteries are similar to currently widely used lithium ion batteries in many aspects. Both are reusable secondary batteries including an anode (a negative electrode), a cathode (a positive electrode), and an electrolyte material, and both can store energy, and are charged and discharged via similar reaction mechanisms.

In the research of positive electrode materials for sodium ion batteries, people are committed to finding a positive electrode material with high energy density, good stability, and environmental friendliness and resource conservation. Currently, it is difficult for a polyanionic positive electrode material to achieve a level close to a theoretical capacity. For example, sodium ferric pyrophosphate (Na₄Fe₃(PO₄)₂P₂O₇) has a theoretical capacity of 129 mAh/g, but achieves only a level around 70 mAh/g in practice. This is mainly because an electronic conductivity is low and ion migration is slow. Enhancing such performance through doping adjustment is particularly important. These modified polyanionic positive electrode materials have a certain promoting effect for development of positive electrode materials for sodium ion batteries.

### SUMMARY

A first aspect of the present disclosure provides a positive electrode active material. The positive electrode active material has the following general formula: NaₓM_{y}Eₙ(P_{1-w}A_{w}O₄)_{z}(P₂₋ᵤAᵤO₇), where A is selected from one or more of S, Si, B, As, or Al; M is selected from one or more of Fe, Ti, V, Cr, Mn, Co, Ni, Cu, or Zn; E is selected from one or more of Zr, Tc, Ru, Rh, Ir, Nb, La, or Ce; x satisfies a condition 2≤x≤4, and 1≤y+n≤3, where neither of y and n is 0; z satisfies a condition 0≤z≤2; w satisfies a condition 0<w≤0.35; and u satisfies a condition 0≤u≤0.2.

A second aspect of the present disclosure provides a preparation method for a positive electrode active material, including:
(1) A metal M source material, a metal E source material, an optional A source material, a sodium source, a phosphorus source, and a reducing agent are mixed to obtain a precursor solution.
(2) The precursor solution is processed to obtain the positive electrode active material.

A is selected from one or more of S, Si, B, As, or Al; M is selected from one or more of Fe, Ti, V, Cr, Mn, Co, Ni, Cu, or Zn; and E is selected from one or more of Zr, Tc, Ru, Rh, Ir, Nb, La, or Ce.

A third aspect of the present disclosure provides a sodium ion battery. The sodium ion battery includes the positive electrode active material described above or a positive electrode active material obtained using the preparation method described above.

A fourth aspect of the present disclosure provides an electrical device, which includes the sodium ion battery described above.

### BRIEF DESCRIPTION OF DRAWINGS

FIG. 1a and FIG. 1b show discharge voltage curves according to Comparative Example 1 and Examples 1 to 7, FIG. 1a shows discharge voltage curves according to Examples 1 to 3, and FIG. 1b shows discharge voltage curves according to Examples 4 to 7;
FIG. 2 shows discharge voltage curves according to Comparative Example 2 and Examples 8 to 10;
FIG. 3 shows discharge voltage curves according to Comparative Example 3 and Examples 11 and 12;
FIG. 4 shows rate performance results according to Comparative Example 1 and Examples 1, 2, 6, and 7;
FIG. 5 shows rate performance results according to Comparative Example 2 and Examples 8 to 10;
FIG. 6 shows rate performance results according to Comparative Example 3 and Examples 11 and 12; and
FIG. 7a is an XRD pattern of a positive electrode active material according to Example 1, FIG. 7b is an XRD pattern of a positive electrode active material according to Example 23, and FIG. 7c is an XRD pattern of a positive electrode active material according to Example 26.

### DESCRIPTION OF EMBODIMENTS

Endpoints of ranges and any values disclosed in this specification are not limited to the exact ranges or values. It should be understood that these ranges or values include values close to these ranges or values. For numerical ranges, endpoint values of ranges, endpoint values of ranges and individual point values, and individual point values can be combined with each other to obtain one or more new numerical ranges, and these numerical ranges shall be considered to be specifically disclosed in this specification.

A first aspect of the present disclosure provides a positive electrode active material. The positive electrode active material has the following general formula: NaₓM_{y}Eₙ(P_{1-w}A_{w}O₄)_{z}(P₂₋ᵤAᵤO₇), where A is selected from one or more of S, Si, B, As, or Al; M is selected from one or more of Fe, Ti, V, Cr, Mn, Co, Ni, Cu, or Zn; E is selected from one or more of Zr, Tc, Ru, Rh, Ir, Nb, La, or Ce; x satisfies a condition 2≤x≤4, and 1≤y+n≤3, where neither of y and n is 0; z satisfies a condition 0≤z≤2; w satisfies a condition 0<w≤0.35; and u satisfies a condition 0≤u≤0.2. A molecular formula of the positive electrode active material is determined according to an elemental quantitative analysis-ICP method. An ICP-OES (inductively coupled plasma optical emission spectrometer) is used, and the molecular formula of the positive electrode active material is finally obtained with reference to XRD.

In the present disclosure, polyanionic positive electrode materials are mainly concentrated on three types of intrinsic materials Na₂FeP₂O₇, Na₃Fe₂(PO₄)P₂O₇, and Na₄Fe₃(PO₄)₂P₂O₇ for doping. Metal M and metal A are doped at a position of Fe, element A is doped at a position of P in a phosphate radical, a structure that maintains an original crystal point group structure unchanged is obtained through combined action of metal M, metal E, and element A, and a volume of a unit cell increases, so that electrochemical performance such as an ionic conductivity, a rate, and a capacity of the positive electrode active material in the present disclosure is improved.

In some specific implementations of the present disclosure, the positive electrode active material in the present disclosure is a polyanionic compound. The polyanionic compound is usually formed by connecting MO₆ octahedrons and PO₄ tetrahedrons through common points, common edges, and common surfaces to form a Na⁺ three-dimensional diffusion channel. A three-dimensional framework allows Na⁺ to have a relatively small volume change during intercalation/deintercalation, resulting in a large cycle count. First, metal E (transition metal Zr, Tc, Ru, Rh, Ir, or Nb, and rare earth metal La or Ce) is doped into a polyanionic unit cell, which increases a volume of the unit cell. The volume of the unit cell increases by 3.5% to 8.7% compared with a volume before element doping. The increase in the volume of the unit cell leads to faster Na ion migration, which improves an actual capacity and rate performance. In addition, conductivity is enhanced after position M is doped with the transition metal and the rare earth metal.

In some specific implementations of the present disclosure, according to first principles, simulations show that an A-O bond length is 1.75 to 2 Å, and an M-O distance is 1.9 to 2.4 Å in a unit cell of the positive electrode active material. Within the above range, the bond length increases, the volume of the unit cell increases, and the volume of the unit cell increases by 3.5% to 8.7% compared with a volume before element doping, which can lower a Na ion diffusion barrier and improve the ionic conductivity of the positive electrode active material.

In some specific implementations of the present disclosure, preferably, M is selected from one or more of Fe, Mn, V, Ni, or Co, E is selected from one or more of Zr, La, or Ru, and A is selected from S and/or Si.

In some specific implementations of the present disclosure, the positive electrode active material has the following general formula: NaₓM_{y}Eₙ(P_{1-w}A_{w}O₄)_{z}(P₂O₇), where x=4, 2.8≤y<3, 0<n≤0.2, z=2, and 0<w≤0.25. The positive electrode active material within the above range is, for example, doped Na₄Fe₃(PO₄)₂P₂O₇.

In some specific implementations of the present disclosure, preferably, the positive electrode active material has the following general formula: NaₓM_{y}Eₙ(P₂₋ᵤAᵤO₇), where x=2, 0.8≤y<1, 0<n≤0.2, and 0<u≤0.25. The positive electrode active material within the above range is, for example, doped Na₂FeP₂O₇.

In some specific implementations of the present disclosure, preferably, the positive electrode active material has the following general formula: NaₓM_{y}Eₙ(P_{1-w}A_{w}O₄)_{z}(P₂O₇), where x=3, 1.8≤y<2, 0<n≤0.2, z=1, and 0<w≤0.25. The positive electrode active material within the above range is, for example, doped Na₃Fe₂(PO₄)P₂O₇.

In some specific implementations of the present disclosure, an electronic conductivity of the positive electrode active material is 1×10⁻⁹ to 5×10⁻⁷ S/cm, a capacity retention ratio after 1200 cycles at 1C is 78% to 94%, and a first-cycle discharge specific capacity at 0.1C is 60 to 94 mAh/g.

A second aspect of the present disclosure provides a preparation method for a positive electrode active material, including:
(1) A metal M source material, a metal E source material, an optional A source material, a sodium source, a phosphorus source, and a reducing agent are mixed to obtain a precursor solution.
(2) The precursor solution is sintered to obtain the positive electrode active material.

A is selected from one or more of S, Si, B, As, or Al; M is selected from one or more of Fe, Ti, V, Cr, Mn, Co, Ni, Cu, or Zn; and E is selected from one or more of Zr, Tc, Ru, Rh, Ir, Nb, La, or Ce.

In some specific implementations of the present disclosure, the metal M source material, the metal E source material, the optional A source material, the sodium source, the phosphorus source, and the reducing agent are mixed and dissolved in water to obtain the precursor solution.

In some specific implementations of the present disclosure, in step (2), the sintering is specifically: drying and sintering the precursor solution to obtain the positive electrode active material.

In some specific implementations of the present disclosure, the metal M source material is selected from one or more of nitrate, oxalate, and citrate of metal M.

In some specific implementations of the present disclosure, the metal E source material is selected from one or more of sulfate, chloride, nitrate, and acetate of metal E.

In some specific implementations of the present disclosure, the A source material is selected from one or more of sulfate, silicate, borate, arsenate, and aluminate.

In some specific implementations of the present disclosure, the sodium source is selected from one or more of sodium carbonate, sodium dihydrogen phosphate, sodium acetate, and sodium nitrate.

In some specific implementations of the present disclosure, the phosphorus source is selected from ammonium dihydrogen phosphate and/or etidronic acid.

In some specific implementations of the present disclosure, the reducing agent is selected from one or more of oxalic acid, citric acid, ascorbic acid, and tartaric acid. In addition to a reducing action, the reducing agent also acts as a carbon source and stabilizes Fe³⁺; and acts as a chelating agent for combination with ferrous ions to form a chelate. In a final calcination process under an inert atmosphere, ascorbic acid forms in-situ carbon that uniformly coats a surface of a material, greatly improving an electrical conductivity of the material.

In some specific implementations of the present disclosure, a temperature of the sintering is 400 to 650°C and time of the sintering is 10 to 36 h.

In some specific implementations of the present disclosure, pre-sintering is further performed before the sintering, a pre-sintering temperature is 260 to 330°C, and pre-sintering time is 1 to 5 h.

In some specific implementations of the present disclosure, the pre-sintering is performed in a hydrogen-argon gas mixture, where a volume percent content of hydrogen in the hydrogen-argon gas mixture may be 1% to 10%.

In some specific implementations of the present disclosure, a molar ratio of the metal M source material, the metal E source material, the A source material, the sodium source, the phosphorus source, and the reducing agent is (0.001-0.999):(0.001-0.999):(0.0001-0.2):(0.001-1.35):(0.001-1.99):(0.001-3.2).

A third aspect of the present disclosure provides a sodium ion battery. The sodium ion battery includes the positive electrode active material described above or a positive electrode active material obtained using the preparation method described above.

A fourth aspect of the present disclosure provides an electrical device, which includes the sodium ion battery described above.

The present disclosure is described in detail below by using examples.

The structural composition of the positive electrode active material in the examples of the present disclosure was determined according to an elemental quantitative analysis-ICP method. An appropriate amount of powder was taken, and dissolved in strong acid, and proportions of different elements were represented using an ICP-OES (inductively coupled plasma optical emission spectrometer). Finally, a molecular formula of the positive electrode active material was obtained with reference to XRD.

Unless otherwise specified in the following examples and comparative examples, normal conditions or conditions recommended by the manufacturer are used. The reagents or instruments used without a specified manufacturer are all conventional products that can be purchased from the market.

### Example 1

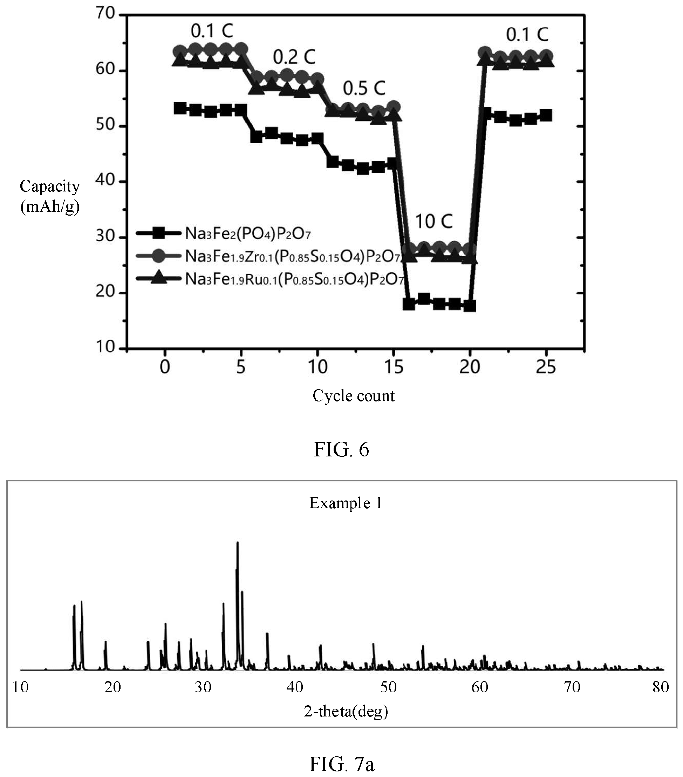

0.029 mol of ferric nitrate and 0.001 mol of zirconium nitrate were dissolved in 600 mL of deionized water. Then, 0.10 mol of ascorbic acid was added, stirring was performed magnetically, and then 0.039 mol of ammonium dihydrogen phosphate, 0.001 mol of sulfate, and 0.04 mol of sodium acetate were slowly added. After stirring for 1 h, a reaction solution was transferred to a spray dryer for spray granulation. Sprayed powder was pre-calcined for 2 h under a hydrogen-argon gas mixture (5%) at a temperature controlled at 300°C. Then, sintering was performed at 500°C for 36 h to obtain carbon-encapsulated Na₄Fe_{2.9}Zr_{0.1}(P_{0.95}S_{0.05}O₄)₂P₂O₇. XRD analysis was performed for Example 1, and an analysis result is shown in FIG. 7a.

### Example 2

0.029 mol of ferric nitrate and 0.001 mol of zirconium nitrate were dissolved in 600 mL of deionized water. Then, 0.10 mol of ascorbic acid was added, stirring was performed magnetically, and then 0.036 mol of ammonium dihydrogen phosphate, 0.004 mol of sulfate, and 0.04 mol of sodium acetate were slowly added. After stirring for 1 h, a reaction solution was transferred to a spray dryer for spray granulation. Sprayed powder was pre-calcined for 2 h under a hydrogen-argon gas mixture (5%) at a temperature controlled at 300°C. Then, sintering was performed at 500°C for 36 h to obtain carbon-encapsulated Na₄Fe_{2.9}Zr_{0.1}(P_{0.8}S_{0.2}O₄)₂P₂O₇.

### Example 3

0.029 mol of ferric nitrate and 0.001 mol of zirconium nitrate were dissolved in 600 mL of deionized water. Then, 0.10 mol of ascorbic acid was added, stirring was performed magnetically, and then 0.033 mol of ammonium dihydrogen phosphate, 0.007 mol of sulfate, and 0.04 mol of sodium acetate were slowly added. After stirring for 1 h, a reaction solution was transferred to a spray dryer for spray granulation. Sprayed powder was pre-calcined for 2 h under a hydrogen-argon gas mixture (5%) at a temperature controlled at 300°C. Then, sintering was performed at 500°C for 36 h to obtain carbon-encapsulated Na₄Fe_{2.9}Zr_{0.1}(P_{0.65}S_{0.35}O₄)₂P₂O₇.

### Example 4

0.029 mol of ferric nitrate and 0.001 mol of zirconium nitrate were dissolved in 600 mL of deionized water. Then, 0.10 mol of ascorbic acid was added, stirring was performed magnetically, and then 0.036 mol of ammonium dihydrogen phosphate, 0.004 mol of silicate, and 0.04 mol of sodium acetate were slowly added. After stirring for 1 h, a reaction solution was transferred to a spray dryer for spray granulation. Sprayed powder was pre-calcined for 2 h under a hydrogen-argon gas mixture (5%) at a temperature controlled at 300°C. Then, sintering was performed at 500°C for 36 h to obtain carbon-encapsulated Na₄Fe_{2.9}Zr_{0.1}(P_{0.8}Si_{0.2}O₄)₂P₂O₇.

### Example 5

0.029 mol of ferric nitrate and 0.001 mol of lanthanum nitrate were dissolved in 600 mL of deionized water. Then, 0.10 mol of ascorbic acid was added, stirring was performed magnetically, and then 0.036 mol of ammonium dihydrogen phosphate, 0.004 mol of silicate, and 0.04 mol of sodium acetate were slowly added. After stirring for 1 h, a reaction solution was transferred to a spray dryer for spray granulation. Sprayed powder was pre-calcined for 2 h under a hydrogen-argon gas mixture (5%) at a temperature controlled at 300°C. Then, sintering was performed at 500°C for 36 h to obtain carbon-encapsulated Na₄Fe_{2.9}La_{0.1}(P_{0.8}Si_{0.2}O₄)₂P₂O₇.

### Example 6

0.029 mol of ferric nitrate and 0.001 mol of Ru(NO)(NO₃)₃ were dissolved in 600 mL of deionized water. Then, 0.10 mol of ascorbic acid was added, stirring was performed magnetically, and then 0.036 mol of ammonium dihydrogen phosphate, 0.004 mol of sulfate, and 0.04 mol of sodium acetate were slowly added. After stirring for 1 h, a reaction solution was transferred to a spray dryer for spray granulation. Sprayed powder was pre-calcined for 2 h under a hydrogen-argon gas mixture (5%) at a temperature controlled at 300°C. Then, sintering was performed at 500°C for 36 h to obtain carbon-encapsulated Na₄Fe_{2.9}Ru_{0.1}(P_{0.8}S_{0.2}O₄)₂P₂O₇.

### Example 7

0.029 mol of ferric nitrate and 0.001 mol of Ru(NO)(NO₃)₃ were dissolved in 600 mL of deionized water. Then, 0.10 mol of ascorbic acid was added, stirring was performed magnetically, and then 0.036 mol of ammonium dihydrogen phosphate, 0.004 mol of silicate, and 0.04 mol of sodium acetate were slowly added. After stirring for 1 h, a reaction solution was transferred to a spray dryer for spray granulation. Sprayed powder was pre-calcined for 2 h under a hydrogen-argon gas mixture (5%) at a temperature controlled at 300°C. Then, sintering was performed at 500°C for 36 h to obtain carbon-encapsulated Na₄Fe_{2.9}Ru_{0.1}(P_{0.8}Si_{0.2}O₄)₂P₂O₇.

### Example 8

0.029 mol of nickel nitrate and 0.001 mol of lanthanum nitrate were dissolved in 600 mL of deionized water. Then, 0.10 mol of ascorbic acid was added, stirring was performed magnetically, and then 0.036 mol of ammonium dihydrogen phosphate, 0.004 mol of sulfate, and 0.04 mol of sodium acetate were slowly added. After stirring for 1 h, a reaction solution was transferred to a spray dryer for spray granulation. Sprayed powder was pre-calcined for 2 h under a hydrogen-argon gas mixture (5%) at a temperature controlled at 300°C. Then, sintering was performed at 500°C for 36 h to obtain carbon-encapsulated Na₄Ni_{2.9}La_{0.1}(P_{0.8}S_{0.2}O₄)₂P₂O₇.

### Example 9

0.029 mol of manganese nitrate and 0.001 mol of lanthanum nitrate were dissolved in 600 mL of deionized water. Then, 0.10 mol of ascorbic acid was added, stirring was performed magnetically, and then 0.036 mol of ammonium dihydrogen phosphate, 0.004 mol of sulfate, and 0.04 mol of sodium acetate were slowly added. After stirring for 1 h, a reaction solution was transferred to a spray dryer for spray granulation. Sprayed powder was pre-calcined for 2 h under a hydrogen-argon gas mixture (5%) at a temperature controlled at 300°C. Then, sintering was performed at 500°C for 36 h to obtain carbon-encapsulated Na₄Mn_{2.9}La_{0.1}(P_{0.8}S_{0.2}O₄)₂P₂O₇.

### Example 10

0.029 mol of titanium nitrate and 0.001 mol of lanthanum nitrate were dissolved in 600 mL of deionized water. Then, 0.10 mol of ascorbic acid was added, stirring was performed magnetically, and then 0.036 mol of ammonium dihydrogen phosphate, 0.004 mol of sulfate, and 0.04 mol of sodium acetate were slowly added. After stirring for 1 h, a reaction solution was transferred to a spray dryer for spray granulation. Sprayed powder was pre-calcined for 2 h under a hydrogen-argon gas mixture (5%) at a temperature controlled at 300°C. Then, sintering was performed at 500°C for 36 h to obtain carbon-encapsulated Na₄Ti_{2.9}La_{0.1}(P_{0.8}S_{0.2}O₄)₂P₂O₇.

### Example 11

0.029 mol of chromium nitrate and 0.001 mol of lanthanum nitrate were dissolved in 600 mL of deionized water. Then, 0.10 mol of ascorbic acid was added, stirring was performed magnetically, and then 0.036 mol of ammonium dihydrogen phosphate, 0.004 mol of sulfate, and 0.04 mol of sodium acetate were slowly added. After stirring for 1 h, a reaction solution was transferred to a spray dryer for spray granulation. Sprayed powder was pre-calcined for 2 h under a hydrogen-argon gas mixture (5%) at a temperature controlled at 300°C. Then, sintering was performed at 500°C for 36 h to obtain carbon-encapsulated Na₄Cr_{2.9}La_{0.1}(P_{0.8}S_{0.2}O₄)₂P₂O₇.

### Example 12

0.029 mol of chromium nitrate and 0.001 mol of zirconium nitrate were dissolved in 600 mL of deionized water. Then, 0.10 mol of ascorbic acid was added, stirring was performed magnetically, and then 0.036 mol of ammonium dihydrogen phosphate, 0.004 mol of sulfate, and 0.04 mol of sodium acetate were slowly added. After stirring for 1 h, a reaction solution was transferred to a spray dryer for spray granulation. Sprayed powder was pre-calcined for 2 h under a hydrogen-argon gas mixture (5%) at a temperature controlled at 300°C. Then, sintering was performed at 500°C for 36 h to obtain carbon-encapsulated Na₄Cr_{2.9}Zr_{0.1}(P_{0.8}S_{0.2}O₄)₂P₂O₇.

### Example 13

0.029 mol of nickel nitrate and 0.001 mol of lanthanum nitrate were dissolved in 600 mL of deionized water. Then, 0.10 mol of ascorbic acid was added, stirring was performed magnetically, and then 0.036 mol of ammonium dihydrogen phosphate, 0.004 mol of sulfate, and 0.04 mol of sodium acetate were slowly added. After stirring for 1 h, a reaction solution was transferred to a spray dryer for spray granulation. Sprayed powder was pre-calcined for 2 h under a hydrogen-argon gas mixture (5%) at a temperature controlled at 300°C. Then, sintering was performed at 500°C for 36 h to obtain carbon-encapsulated Na₄Ni_{2.9}La_{0.1}(P_{0.8}S_{0.2}O₄)₂P₂O₇.

### Example 14

0.029 mol of vanadium nitrate and 0.001 mol of iridium nitrate were dissolved in 600 mL of deionized water. Then, 0.10 mol of ascorbic acid was added, stirring was performed magnetically, and then 0.036 mol of ammonium dihydrogen phosphate, 0.004 mol of sulfate, and 0.04 mol of sodium acetate were slowly added. After stirring for 1 h, a reaction solution was transferred to a spray dryer for spray granulation. Sprayed powder was pre-calcined for 2 h under a hydrogen-argon gas mixture (5%) at a temperature controlled at 300°C. Then, sintering was performed at 500°C for 36 h to obtain carbon-encapsulated Na₄V_{2.9}Ir_{0.1}(P_{0.8}S_{0.2}O₄)₂P₂O₇.

### Example 15

0.029 mol of cobalt nitrate and 0.001 mol of iridium nitrate were dissolved in 600 mL of deionized water. Then, 0.10 mol of ascorbic acid was added, stirring was performed magnetically, and then 0.036 mol of ammonium dihydrogen phosphate, 0.004 mol of sulfate, and 0.04 mol of sodium acetate were slowly added. After stirring for 1 h, a reaction solution was transferred to a spray dryer for spray granulation. Sprayed powder was pre-calcined for 2 h under a hydrogen-argon gas mixture (5%) at a temperature controlled at 300°C. Then, sintering was performed at 500°C for 36 h to obtain carbon-encapsulated Na₄Co_{2.9}Ir_{0.1}(P_{0.8}S_{0.2}O₄)₂P₂O₇.

### Example 16

0.029 mol of zinc nitrate and 0.001 mol of iridium nitrate were dissolved in 600 mL of deionized water. Then, 0.10 mol of ascorbic acid was added, stirring was performed magnetically, and then 0.036 mol of ammonium dihydrogen phosphate, 0.004 mol of sulfate, and 0.04 mol of sodium acetate were slowly added. After stirring for 1 h, a reaction solution was transferred to a spray dryer for spray granulation. Sprayed powder was pre-calcined for 2 h under a hydrogen-argon gas mixture (5%) at a temperature controlled at 300°C. Then, sintering was performed at 500°C for 36 h to obtain carbon-encapsulated Na₄Zn_{2.9}Ir_{0.1}(P_{0.8}S_{0.2}O₄)₂P₂O₇.

### Example 17

0.029 mol of ferric nitrate and 0.001 mol of cerium nitrate were dissolved in 600 mL of deionized water. Then, 0.10 mol of ascorbic acid was added, stirring was performed magnetically, and then 0.039 mol of ammonium dihydrogen phosphate, 0.001 mol of sulfate, and 0.04 mol of sodium acetate were slowly added. After stirring for 1 h, a reaction solution was transferred to a spray dryer for spray granulation. Sprayed powder was pre-calcined for 2 h under a hydrogen-argon gas mixture (5%) at a temperature controlled at 300°C. Then, sintering was performed at 500°C for 36 h to obtain carbon-encapsulated Na₄Fe_{2.9}Ce_{0.1}(P_{0.95}S_{0.05}O₄)₂P₂O₇.

### Example 18

0.029 mol of ferric nitrate and 0.001 mol of technetium nitrate were dissolved in 600 mL of deionized water. Then, 0.10 mol of ascorbic acid was added, stirring was performed magnetically, and then 0.039 mol of ammonium dihydrogen phosphate, 0.001 mol of sulfate, and 0.04 mol of sodium acetate were slowly added. After stirring for 1 h, a reaction solution was transferred to a spray dryer for spray granulation. Sprayed powder was pre-calcined for 2 h under a hydrogen-argon gas mixture (5%) at a temperature controlled at 300°C. Then, sintering was performed at 500°C for 36 h to obtain carbon-encapsulated Na₄Fe_{2.9}Tc_{0.1}(P_{0.95}S_{0.05}O₄)₂P₂O₇.

### Example 19

0.029 mol of ferric nitrate and 0.001 mol of niobium nitrate were dissolved in 600 mL of deionized water. Then, 0.10 mol of ascorbic acid was added, stirring was performed magnetically, and then 0.039 mol of ammonium dihydrogen phosphate, 0.001 mol of sulfate, and 0.04 mol of sodium acetate were slowly added. After stirring for 1 h, a reaction solution was transferred to a spray dryer for spray granulation. Sprayed powder was pre-calcined for 2 h under a hydrogen-argon gas mixture (5%) at a temperature controlled at 300°C. Then, sintering was performed at 500°C for 36 h to obtain carbon-encapsulated Na₄Fe_{2.9}Nb_{0.1}(P_{0.95}S_{0.05}O₄)₂P₂O₇.

### Example 20

0.029 mol of ferric nitrate and 0.001 mol of zirconium nitrate were dissolved in 600 mL of deionized water. Then, 0.10 mol of ascorbic acid was added, stirring was performed magnetically, and then 0.039 mol of ammonium dihydrogen phosphate, 0.001 mol of borate, and 0.04 mol of sodium acetate were slowly added. After stirring for 1 h, a reaction solution was transferred to a spray dryer for spray granulation. Sprayed powder was pre-calcined for 2 h under a hydrogen-argon gas mixture (5%) at a temperature controlled at 300°C. Then, sintering was performed at 500°C for 36 h to obtain carbon-encapsulated Na₄Fe_{2.9}Zr_{0.1}(P_{0.95}B_{0.05}O₄)₂P₂O₇.

### Example 21

0.029 mol of ferric nitrate and 0.001 mol of zirconium nitrate were dissolved in 600 mL of deionized water. Then, 0.10 mol of ascorbic acid was added, stirring was performed magnetically, and then 0.039 mol of ammonium dihydrogen phosphate, 0.001 mol of arsenate, and 0.04 mol of sodium acetate were slowly added. After stirring for 1 h, a reaction solution was transferred to a spray dryer for spray granulation. Sprayed powder was pre-calcined for 2 h under a hydrogen-argon gas mixture (5%) at a temperature controlled at 300°C. Then, sintering was performed at 500°C for 36 h to obtain carbon-encapsulated Na₄Fe_{2.9}Zr_{0.1}(P_{0.95}As_{0.05}O₄)₂P₂O₇.

### Example 22

0.029 mol of ferric nitrate and 0.001 mol of zirconium nitrate were dissolved in 600 mL of deionized water. Then, 0.10 mol of ascorbic acid was added, stirring was performed magnetically, and then 0.039 mol of ammonium dihydrogen phosphate, 0.001 mol of aluminate, and 0.04 mol of sodium acetate were slowly added. After stirring for 1 h, a reaction solution was transferred to a spray dryer for spray granulation. Sprayed powder was pre-calcined for 2 h under a hydrogen-argon gas mixture (5%) at a temperature controlled at 300°C. Then, sintering was performed at 500°C for 36 h to obtain carbon-encapsulated Na₄Fe_{2.9}Zr_{0.1}(P_{0.95}Al_{0.05}O₄)₂P₂O₇.

### Example 23

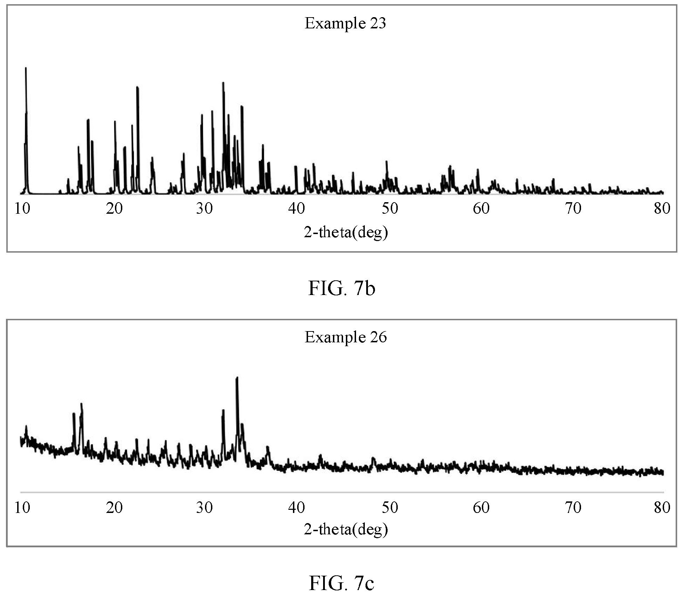

0.038 mol of ferric nitrate and 0.002 mol of zirconium nitrate were dissolved in 700 mL of deionized water. Then, 0.12 mol of ascorbic acid was added, stirring was performed magnetically, and then 0.076 mol of ammonium dihydrogen phosphate, 0.004 mol of sulfate, and 0.08 mol of sodium acetate were slowly added. After stirring for 1 h, a reaction solution was transferred to a spray dryer for spray granulation. Sprayed powder was pre-calcined for 4 h under a hydrogen-argon gas mixture (5%) at a temperature controlled at 300°C. Then, sintering was performed at 600°C for 22 h to obtain carbon-encapsulated Na₂Fe_{0.95}Zr_{0.05}P_{1.9}S_{0.1}O₇. XRD analysis was performed for Example 23, and an analysis result is shown in FIG. 7b.

### Example 24

0.038 mol of ferric nitrate and 0.002 mol of Ru(NO)(NO₃)₃ were dissolved in 700 mL of deionized water. Then, 0.12 mol of ascorbic acid was added, stirring was performed magnetically, and then 0.076 mol of ammonium dihydrogen phosphate, 0.004 mol of sulfate, and 0.08 mol of sodium acetate were slowly added. After stirring for 1 h, a reaction solution was transferred to a spray dryer for spray granulation. Sprayed powder was pre-calcined for 4 h under a hydrogen-argon gas mixture (5%) at a temperature controlled at 300°C. Then, sintering was performed at 600°C for 22 h to obtain carbon-encapsulated Na₂Fe_{0.95}Ru_{0.05}P_{1.9}S_{0.1}O₇.

### Example 25

0.038 mol of ferric nitrate and 0.002 mol of zirconium nitrate were dissolved in 700 mL of deionized water. Then, 0.12 mol of ascorbic acid was added, stirring was performed magnetically, and then 0.076 mol of ammonium dihydrogen phosphate, 0.004 mol of silicate, and 0.08 mol of sodium acetate were slowly added. After stirring for 1 h, a reaction solution was transferred to a spray dryer for spray granulation. Sprayed powder was pre-calcined for 4 h under a hydrogen-argon gas mixture (5%) at a temperature controlled at 300°C. Then, sintering was performed at 600°C for 22 h to obtain carbon-encapsulated Na₂Fe_{0.95}Zr_{0.05}P_{1.9}Si_{0.1}O₇.

### Example 26

0.038 mol of ferric nitrate nonahydrate and 0.002 mol of zirconium nitrate were dissolved in 700 mL of deionized water. Then, 0.12 mol of ascorbic acid was added, stirring was performed magnetically, and then 0.057 mol of ammonium dihydrogen phosphate, 0.003 mol of sulfate, and 0.06 mol of sodium acetate were slowly added. After stirring for 1 h, a reaction solution was transferred to a spray dryer for spray granulation. Sprayed powder was pre-calcined for 2 h under a hydrogen-argon gas mixture (5%) at a temperature controlled at 300°C. Then, sintering was performed at 550°C for 20 h to obtain carbon-encapsulated Na₃Fe_{1.9}Zr_{0.1}(P_{0.85}S_{0.15}O₄)P₂O₇. XRD analysis was performed for Example 26, and an analysis result is shown in FIG. 7c.

### Example 27

0.038 mol of ferric nitrate nonahydrate and 0.002 mol of Ru(NO)(NO₃)₃ were dissolved in 700 mL of deionized water. Then, 0.12 mol of ascorbic acid was added, stirring was performed magnetically, and then 0.057 mol of ammonium dihydrogen phosphate, 0.003 mol of sulfate, and 0.06 mol of sodium acetate were slowly added. After stirring for 1 h, a reaction solution was transferred to a spray dryer for spray granulation. Sprayed powder was pre-calcined for 2 h under a hydrogen-argon gas mixture (5%) at a temperature controlled at 300°C. Then, sintering was performed at 550°C for 20 h to obtain carbon-encapsulated Na₃Fe_{1.9}Ru_{0.1}(P_{0.85}S_{0.15}O₄)P₂O₇.

### Comparative Example 1

0.03 mol of ferric nitrate nonahydrate was dissolved in 600 mL of deionized water. Then, 0.10 mol of ascorbic acid was added, stirring was performed magnetically, and then 0.04 mol of ammonium dihydrogen phosphate and 0.04 mol of sodium acetate were slowly added. After stirring for 1 h, a reaction solution was transferred to a spray dryer for spray granulation. Sprayed powder was pre-calcined for 2 h under a hydrogen-argon gas mixture (5%) at a temperature controlled at 300°C. Then, sintering was performed at 500°C for 36 h to obtain carbon-encapsulated Na₄Fe₃(PO₄)₂P₂O₇.

### Comparative Example 2

0.04 mol of ferric nitrate nonahydrate was dissolved in 700 mL of deionized water. Then, 0.12 mol of ascorbic acid was added, stirring was performed magnetically, and then 0.08 mol of ammonium dihydrogen phosphate and 0.08 mol of sodium acetate were slowly added. After stirring for 1 h, a reaction solution was transferred to a spray dryer for spray granulation. Sprayed powder was pre-calcined for 4 h under a hydrogen-argon gas mixture (5%) at a temperature controlled at 300°C. Then, sintering was performed at 600°C for 20 h to obtain carbon-encapsulated Na₂FeP₂O₇.

### Comparative Example 3

0.04 mol of ferric nitrate was dissolved in 700 mL of deionized water. Then, 0.12 mol of ascorbic acid was added, stirring was performed magnetically, and then 0.06 mol of ammonium dihydrogen phosphate and 0.06 mol of sodium acetate were slowly added. After stirring for 1 h, a reaction solution was transferred to a spray dryer for spray granulation. Sprayed powder was pre-calcined for 2 h under a hydrogen-argon gas mixture (5%) at a temperature controlled at 300°C. Then, sintering was performed at 550°C for 20 h to obtain carbon-encapsulated Na₃Fe₂(PO₄)P₂O₇.

Test Example 1: Electronic conductivities, capacity retention ratios after 1200 cycles at 1C, and first-cycle discharge specific capacities at 0.1C were measured for positive electrode active materials obtained in the examples and the comparative examples.

Electronic conductivity: The positive electrode active material was measured using a direct current four probe method.

1200-cycle capacity retention ratio: The positive electrode active materials obtained in the examples and the comparative examples were applied to sodium ion batteries. After capacity measurement through charging and discharging at 0.2C, a discharge capacity was used as a rated capacity. A voltage range was 2 to 3.4 V. 1C cycling was used, with each step resting for 10 minutes. A constant-current and constant-voltage mode was used for charging, a cutoff current was 0.05C, and a constant-current mode was used for charging.

First-cycle discharge specific capacity at 0.1C: Small soft packages were made through hand-folding, were charged at a rate of 0.1C to 3.5V for formation, and after aging for two days, were discharged at 0.1C to 2V for capacity grading.

Test results are shown in Table 1.

**Table 1**

| Number | Structural formula of a positive electrode material of a battery | Electronic conductivity (S/cm) | 1200 cycles at 1C | First-cycle discharge specific capacity at 0.1C (mAh/g) |
|---|---|---|---|---|
| Example 1 | Na₄Fe_{2.9}Zr_{0.1}(P_{0.95}S_{0.05}O₄)₂P₂O₇ | 1.12×10⁻⁷ | 92.96% | 89.26 |
| Example 2 | Na₄Fe_{2.9}Zr_{0.1}(P_{0.8}S_{0.2}O₄)₂P₂O₇ | 9.98×10⁻⁸ | 91.50% | 93.59 |
| Example 3 | Na₄Fe_{2.9}Zr_{0.1}(P_{0.65}S_{0.35}O₄)₂P₂O₇ | 8.12×10⁻⁸ | 92.40% | 89.24 |
| Example 4 | Na₄Fe_{2.9}Zr_{0.1}(P_{0.8}Si_{0.2}O₄)₂P₂O₇ | 3.78×10⁻⁷ | 93.16% | 89.51 |
| Example 5 | Na₄Fe_{2.9}La_{0.1}(P_{0.8}S_{0.2}O₄)₂P₂O₇ | 9.89×10⁻⁸ | 92.53% | 91.95 |
| Example 6 | Na₄Fe_{2.9}Ru_{0.1}(P_{0.8}S_{0.2}O₄)₂P₂O₇ | 1.15×10⁻⁷ | 92.89% | 89.01 |
| Example 7 | Na₄Fe_{2.9}Ru_{0.1}(P_{0.8}Si_{0.2}O₄)₂P₂O₇ | 1.01×10⁻⁷ | 93.57% | 88.18 |
| Example 8 | Na₄Ni_{2.9}La_{0.1}(P_{0.8}S_{0.2}O₄)₂P₂O₇ | 5.34×10⁻⁸ | 85.53% | 86.31 |
| Example 9 | Na₄Mn_{2.9}La_{0.1}(P_{0.8}S_{0.2}O₄)₂P₂O₇ | 4.68×10⁻⁸ | 88.58% | 87.62 |
| Example 10 | Na₄Ti_{2.9}La_{0.1}(P_{0.8}S_{0.2}O₄)₂P₂O₇ | 6.31×10⁻⁸ | 80.92% | 78.27 |
| Example 11 | Na₄Cr_{2.9}La_{0.1}(P_{0.8}S_{0.2}O₄)₂P₂O₇ | 6.42×10⁻⁹ | 79.53% | 74.56 |
| Example 12 | Na₄Cr_{2.9}Z_{10.1}(P_{0.8}S_{0.2}O₄)₂P₂O₇ | 5.76×10⁻⁹ | 78.53% | 78.97 |
| Example 13 | Na₄Fe_{2.9}Ir_{0.1}(P_{0.8}S_{0.2}O₄)₂P₂O₇ | 3.86×10⁻⁹ | 82.53% | 85.35 |
| Example 14 | Na₄V_{2.9}Ir_{0.1}(P_{0.8}S_{0.2}O₄)₂P₂O₇ | 8.34×10⁻⁸ | 89.68% | 89.75 |
| Example 15 | Na₄Co_{2.91}Ir_{0.1}(P_{0.8}S_{0.2}O₄)₂P₂O₇ | 9.65×10⁻⁸ | 86.37% | 88.29 |
| Example 16 | Na₄Zn_{2.9}Ir_{0.1}(P_{0.8}S_{0.2}O₄)₂P₂O₇ | 4.02×10⁻⁹ | 78.91% | 75.39 |
| Example 17 | Na₄Fe_{2.9}Ce_{0.1}(P_{0.95}S_{0.05}O₄)₂P₂O₇ | 6.76×10⁻⁸ | 83.18% | 83.98 |
| Example 18 | Na₄Fe_{2.9}Tc_{0.1}(P_{0.95}S_{0.05}O₄)₂P₂O₇ | 2.78×10⁻⁸ | 83.73% | 82.746 |
| Example 19 | Na₄Fe_{2.9}Nb_{0.1}(P_{0.95}S_{0.05}O₄)₂P₂O₇ | 3.87×10⁻⁸ | 85.34% | 82.16 |
| Example 20 | Na₄Fe_{2.9}Zr_{0.1}(P_{0.95}B_{0.05}O₄)₂P₂O₇ | 2.78×10⁻⁸ | 85.19% | 83.08 |
| Example 21 | Na₄Fe_{2.9}Zr_{0.1}(P_{0.95}As_{0.05}O₄)₂P₂O₇ | 3.98×10⁻⁸ | 81.783% | 82.91 |
| Example 22 | Na₄Fe_{2.9}Zr_{0.1}(P_{0.95}Al_{0.05}O₄)₂P₂O₇ | 2.12×10⁻⁸ | 83.29% | 82.86 |
| Example 23 | Na₂Fe_{0.95}Zr_{0.05}P_{1.9}S_{0.1}O₇ | 7.12×10⁻⁹ | 86.40% | 88.42 |
| Example 24 | Na₂Fe_{0.95}Ru_{0.05}P_{1.9}S_{0.1}O₇ | 4.55×10⁻⁹ | 85.29% | 86.39 |
| Example 25 | Na₂Fe_{0.95}Zr_{0.05}P_{1.9}Si_{0.1}O₇ | 4.05×10⁻⁹ | 89.20% | 89.67 |
| Example 26 | Na₃Fe_{1.9}Zr_{0.1}(P_{0.85}S_{0.15}O₄)P₂O₇ | 1.01×10⁻⁸ | 90.50% | 64.00 |
| Example 27 | Na₃Fe_{1.9}Ru_{0.1}(P_{0.85}S_{0.15}O₄)P₂O₇ | 1.25×10⁻⁸ | 92.86% | 61.04 |
| Comparative Example 1 | Na₄Fe₃(PO₄)₂P₂O₇ | 2.17×10⁻⁹ | 77.5% | 72.84 |
| Comparative Example 2 | Na₂FeP₂O₇ | 3.88×10⁻⁹ | 74.8% | 77.63 |
| Comparative Example 3 | Na₃Fe₂(PO₄)P₂O₇ | 9.80×10⁻⁹ | 66.9% | 53.81 |

It can be learned from the results in Table 1 that, examples of positive electrode active materials obtained through double doping in the present disclosure have good conductivity and rate performance and high voltages, and achieve significantly better effects.

For doping of the Na₄Fe₃(PO₄)₂P₂O₇ active material, through comparison between Examples 1 to 22 and Comparative Example 1, M and E are double-doped into a polyanionic positive electrode material, and element A is doped at position P, so that rate performance is improved. M is preferably selected from one or more of Fe, Mn, V, Ni, or Co, E is preferably selected from one or more of Zr, La, or Ru, and A is preferably selected from S and/or Si.

For doping of the Na₂FeP₂O₇ active material, through comparison between Examples 23 to 25 and Comparative Example 2, M and E are double-doped into a polyanionic positive electrode material, and element A is doped at position P, so that rate performance is improved. Effects of Examples 23 to 25 are better than that of Comparative Example 2.

For doping of the Na₃Fe₂(PO₄)P₂O₇ active material, through comparison between Examples 26 and 27 and Comparative Example 3, M and E are double-doped into a polyanionic positive electrode material, and element A is doped at position P, so that rate performance is improved. Effects of Examples 26 and 27 are better than that of Comparative Example 3.

Test Example 2: Discharge voltage and rate performance tests for the examples and the comparative examples.

Discharge voltage: A slurry was prepared by mixing positive electrode powder, a conductive agent, and a binder at a ratio of 100:4:2, coated on carbon-coated aluminum foil, baked, and then rolled into an electrode sheet, which was compacted to 1.9 g/cc. The electrode sheet was cut, weighed, and baked in vacuum at 120 degrees Celsius for one day to prepare a coin half-cell. A negative electrode was a hand-pressed sodium tablet. Electrochemical performance of a positive electrode material was evaluated, to obtain discharge voltage curves of different positive electrode materials.

Rate performance: 0.2C was uniformly used for charging, and a discharge rate was set to 0.1C\0.2C\0.5C\10C, with 5 cycles at each rate. Discharging at different rates can reflect an ion diffusion capability of a positive electrode material.

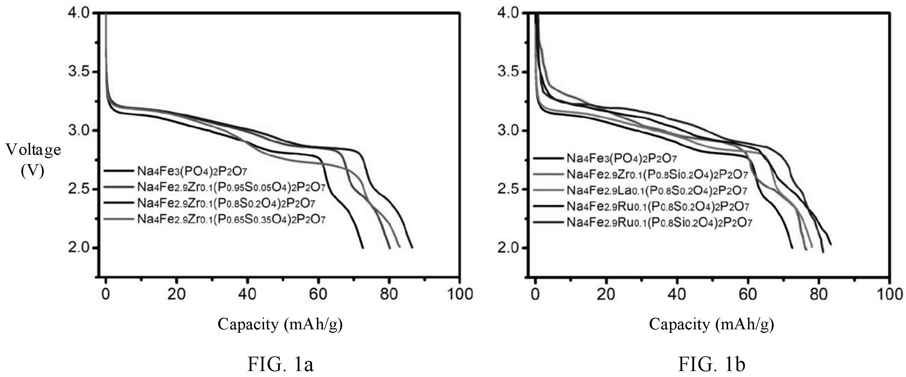

FIG. 1a and FIG. 1b show discharge voltage curves according to Comparative Example 1 and Examples 1 to 7. It can be learned that doping of Zr\La\Ru and the anion S\Si allows a capacity of the Na₄Fe₃(PO₄)₂P₂O₇ doped material to be better utilized and the voltage to be improved, which has a positive effect on increasing energy density of a battery.

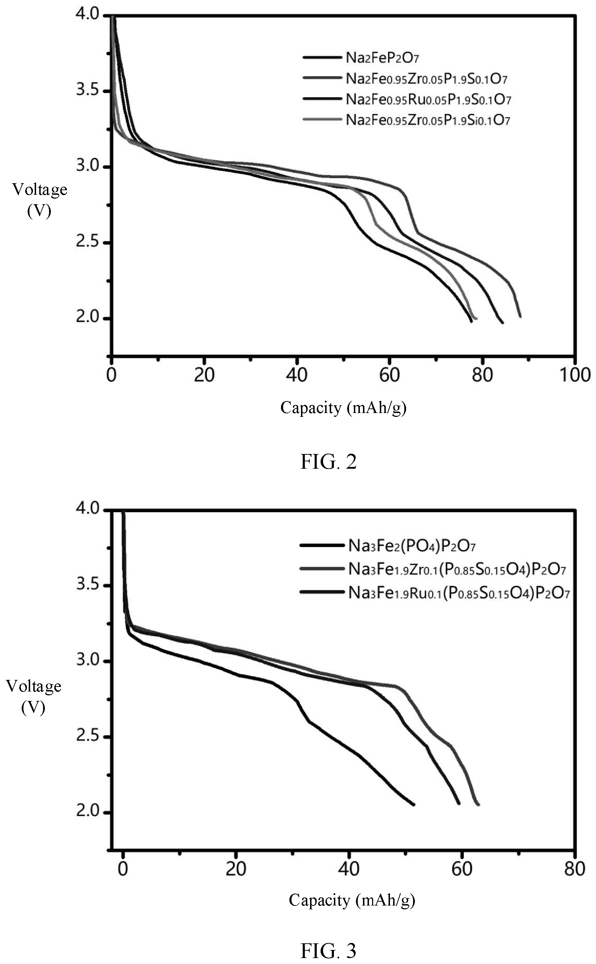

FIG. 2 shows discharge voltage curves according to Comparative Example 2 and Examples 23 to 25. It can be learned that doping of Zr\Ru and the anion S\Si also increases a capacity and a voltage of the Na₂FeP₂O₇ doped material, greatly improving electrochemical performance of such a material.

FIG. 3 shows discharge voltage curves according to Comparative Example 3 and Examples 26 and 27. It can be learned that doping of Zr\Ru and the anion S also increases a capacity and a voltage of the Na₃Fe₂(PO₄)P₂O₇ doped material, greatly improving electrochemical performance of such a material.

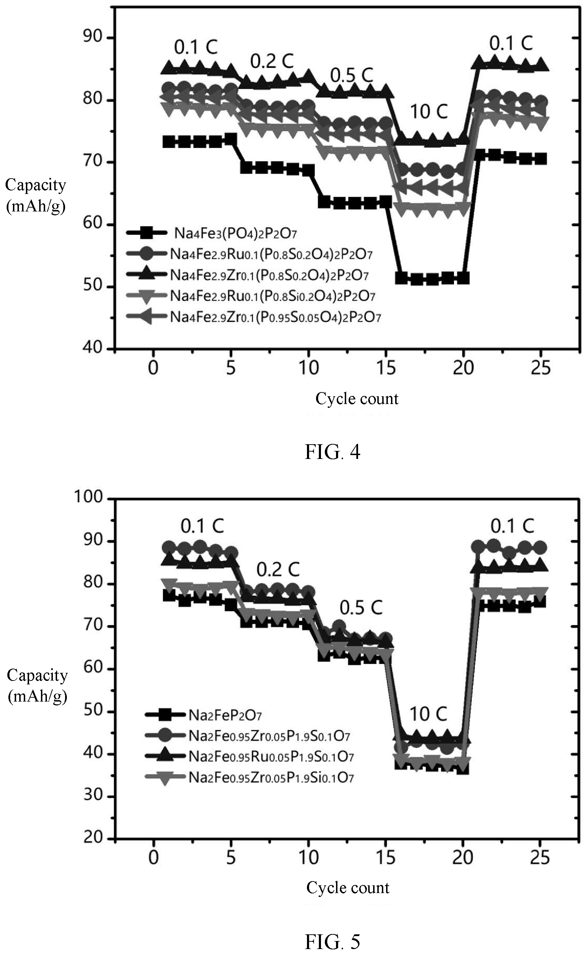

FIG. 4 shows rate performance results according to Comparative Example 1 and Examples 1, 2, 6, and 7. Element doping can significantly improve rate performance of the Na₄Fe₃(PO₄)₂P₂O₇ doped material.

FIG. 5 shows rate performance results according to Comparative Example 2 and Examples 23 to 25. Element doping can significantly improve rate performance of the Na₂FeP₂O₇ doped material.

FIG. 6 shows rate performance results according to Comparative Example 3 and Examples 26 and 27. Element doping can significantly improve rate performance of the Na₃Fe₂(PO₄)P₂O₇ doped material.

FIG. 7a, FIG. 7b, and FIG. 7c are XRD patterns of positive electrode active materials according to Example 1, Example 23, and Example 26 of the present disclosure, respectively. Molecular formulas in the corresponding examples can be obtained from main peak positions and lattice parameters of the materials obtained in Examples 1, 23, and 26 in combination with element ratio analysis of ICP. A phase purity of the material after sintering is high.

Preferred implementations of the present disclosure are described in detail above, but the present disclosure is not limited thereto. Within the technical concept scope of the present disclosure, a plurality of simple modifications may be made to the technical solutions of the present disclosure, including combinations of technical features in any other appropriate manner. These simple modifications and combinations should also be considered as content disclosed in the present disclosure, and all fall within the protection scope of the present disclosure.

## Claims

1. A positive electrode active material, having the following general formula: NaₓM_{y}Eₙ(P_{1-w}A_{w}O₄)_{z}(P₂₋ᵤAᵤO₇), wherein A is selected from one or more of S, Si, B, As, or Al; M is selected from one or more of Fe, Ti, V, Cr, Mn, Co, Ni, Cu, or Zn; E is selected from one or more of Zr, Tc, Ru, Rh, Ir, Nb, La, or Ce; x satisfies a condition 2≤x≤4, and 1≤y+n≤3, wherein neither of y and n is 0; z satisfies a condition 0≤z≤2; w satisfies a condition 0<w≤0.35; and u satisfies a condition 0≤u≤0.2.

2. The positive electrode active material according to claim 1, wherein M is selected from one or more of Fe, Mn, V, Ni, or Co, E is selected from one or more of Zr, La, or Ru, and A is selected from S and/or Si.

3. The positive electrode active material according to claim 1 or 2, wherein the positive electrode active material has the following general formula: NaₓM_{y}Eₙ(P_{1-w}A_{w}O₄)_{z}(P₂O₇), wherein x=4, 2.8≤y<3, 0<n≤0.2, z=2, and 0<w≤0.25; or
the positive electrode active material has the following general formula: NaₓM_{y}Eₙ(P₂₋ᵤAᵤO₇), wherein x=2, 0.8≤y<1, 0<n≤0.2, and 0<u≤0.2; or
the positive electrode active material has the following general formula: NaₓM_{y}Eₙ(P_{1-w}A_{w}O₄)_{z}(P₂O₇), wherein x=3, 1.8≤y<2, 0<n≤0.2, z=1, and 0<w≤0.25.

4. The positive electrode active material according to any one of claims 1 to 3, wherein performance of the positive electrode active material satisfies at least one of the following conditions: an electronic conductivity is 3×10⁻⁹ to 5×10⁻⁷ S/cm, a capacity retention ratio after 1200 cycles at 1C is 78% to 94%, and a first-cycle discharge specific capacity at 0.1C is 61 to 94 mAh/g.

5. A preparation method for a positive electrode active material, comprising:
(1) mixing a metal M source material, a metal E source material, an optional A source material, a sodium source, a phosphorus source, and a reducing agent to obtain a precursor solution; and
(2) sintering the precursor solution to obtain the positive electrode active material;
wherein A is selected from one or more of S, Si, B, As, or Al; M is selected from one or more of Fe, Ti, V, Cr, Mn, Co, Ni, Cu, or Zn; and E is selected from one or more of Zr, Tc, Ru, Rh, Ir, Nb, La, or Ce.

6. The preparation method according to claim 5, wherein in step (2), the sintering is specifically: drying and sintering the precursor solution to obtain the positive electrode active material;
preferably, the metal M source material is selected from one or more of nitrate, oxalate, and citrate of metal M;
preferably, the metal E source material is selected from one or more of sulfate, chloride, nitrate, and acetate of metal E;
preferably, the A source material is selected from one or more of sulfate, silicate, borate, arsenate, and aluminate;
preferably, the sodium source is selected from one or more of sodium carbonate, sodium dihydrogen phosphate, sodium acetate, and sodium nitrate;
preferably, the phosphorus source is selected from ammonium dihydrogen phosphate and/or etidronic acid; and
preferably, the reducing agent is selected from one or more of oxalic acid, citric acid, ascorbic acid, and tartaric acid.

7. The preparation method according to claim 5 or 6, wherein a temperature of the sintering is 400 to 650°C and time of the sintering is 10 to 36 h.

8. The preparation method according to any one of claims 5 to 7, wherein pre-sintering is further performed before the sintering, a pre-sintering temperature is 260 to 330°C, and pre-sintering time is 1 to 5 h.

9. The preparation method according to any one of claims 5 to 8, wherein a molar ratio of the metal M source material, the metal E source material, the A source material, the sodium source, the phosphorus source, and the reducing agent is (0.001-0.999):(0.001-0.999):(0.0001-0.2):(0.001-1.35):(0.001-1.99):(0.001-3.2).

10. A sodium ion battery, comprising the positive electrode active material according to any one of claims 1 to 4 or a positive electrode active material obtained using the preparation method according to any one of claims 5 to 9.

11. An electrical device, comprising the sodium ion battery according to claim 10.
